# FASCICULE DE BREVET EUROPEEN

(11) **EP 1 158 061 B1**
(45) Date de publication et mention de la délivrance du brevet: **29.09.2004**
(21) Numéro de dépôt: 00111372.9
(22) Date de dépôt: 26.05.2000
(51) Int. Cl.: C22C 1/04, B22F 3/16, B22F 5/12, B32B 31/18

(54) **Réalisation d'un matériau solide, de forme parallélépipédique ou cylindrique, stratifié, fritté, découpé et traité thermiquement**
Herstellung eines festes Werkstoffes in quader- oder zylindrischer Form, der laminiert, gesintert, geschnitten und wärmebehandelt wird
Production of a solid material in parallelepipedal or cylindrical shape, laminated, sintered, cut-up and thermally treated

(43) Date de publication de la demande: 28.11.2001
(73) Titulaire: Technodop Ltd. (Société de Droit Irlandais), Dublin 2 (IE)
(72) Inventeur: Cohen-Adad, Marie-Thérése, 69300 Caluire (FR); Laversenne, Laetitia, 69007 Lyon (FR); Goutaudier, Christelle, 69250 Fleurieu/Saone (FR); Boulon, Georges, 69005 Lyon (FR)
(74) Mandataire: Gaucherand, Michel

(56) Documents cités:
- EP-A- 0 870 919
- GB-A- 565 520
- US-A- 4 217 399
- US-A- 5 424 282
- DATABASE WPI Section Ch, Week 199818 Derwent Publications Ltd., London, GB; Class M22, AN 1998-205532 XP002149221 & RU 2 089 347 C (SINELSHCHIKOV V V), 10 septembre 1997 (1997-09-10)
- PATENT ABSTRACTS OF JAPAN vol. 006, no. 040 (C-094), 12 mars 1982 (1982-03-12) & JP 56 155046 A (NIPPON TELEGR & TELEPH CORP), 1 décembre 1981 (1981-12-01)
- LIN C -Y ET AL: "EXTRUSION PROCESS FOR MANUFACTURE OF BULK FUNCTIONALLY GRADED MATERIALS" POWDER METALLURGY,GB,METALS SOCIETY. LONDON, vol. 39, no. 3, 1996, pages 219-222, XP000641583 ISSN: 0032-5899

## Description

### Domaine de l'invention

La présente invention concerne un procédé de préparation d'un matériau, de forme parallélépipédique ou cylindrique, formé d'au moins deux constituants, qui sont des métaux, des oxydes métalliques ou des matériaux minéraux, résultant d'une découpe particulière suivie d'un traitement thermique.

La présente invention concerne plus particulièrement un procédé de préparation d'un matériau, de forme parallélépipédique ou cylindrique, stratifié, fritté, formé à partir d'au moins deux constituants, qui peuvent être des métaux ou des composés chimiques solides, présents sous la forme de poudre ou sous la forme de matière fondue broyée après solidification, ce matériau résultant d'une découpe particulière, effectuée selon un parallélépipède ou selon un cylindre, suivie d'un traitement thermique, pour rendre miscibles les constituants le formant en donnant une fibre.

L'invention concerne aussi le traitement thermique du matériau de forme parallélépipédique ou cylindrique, stratifié et fritté, formé à partir d'au moins deux constituants, et soumis après frittage à une découpe particulière effectuée selon un parallélépipède ou selon un cylindre, ledit traitement thermique s'effectuant selon la technique de la fusion de zone ou de la zone flottante, en donnant selon la nature des constituants utilisés, des fibres monophasées monocristallines ou polycristallines ou vitreuses, ou des fibres polyphasées à gradient de composition, dans le but, par exemple, d'une optimisation rapide des caractéristiques physiques de ces matériaux, par détermination de la composition idéale pour lesdits matériaux, ou pour permettre d'établir le spectre des transformations de phases dans un diagramme de phases.

L'invention concerne également les matériaux résultant du procédé de l'invention.

Plusieurs techniques, notamment utilisées dans le domaine de la métallurgie des poudres, et permettant la formation de matériaux complexes sont connues de l'art antérieur. Ces techniques de formation de matériaux sont généralement suivies de traitement(s) thermique(s), comme par exemple le frittage ou le processus de recuit.

On sait réaliser des pièces mécaniques tels que, par exemple, des pignons hélicoïdaux, à l'aide de ces techniques conventionnelles de la métallurgie des poudres, par compression en moule de carbure de tungstène en poudre et éventuellement d'un liant. Une fois la pièce démoulée, un traitement thermique de frittage à température adéquate de ladite pièce démoulée est effectué.

Un document (EP A -870919) décrit un procédé de réalisation par étapes successives d'un piston (pour moteur à explosion) de forme cylindrique, à partir de deux types de constituants métalliques pulvérulents (1A et 1B), les étapes successives étant :
- la formation d'un barreau de forme cylindrique par extrusion à chaud (400° à 500° C) de l'un des deux types (1A) de constituants métalliques pulvérulents puis la découpe d'un disque de type 1A, d'épaisseur déterminée,
- la formation d'un autre barreau de forme cylindrique par extrusion à chaud (400° à 500° C), de l'autre type(1B) de constituants métalliques pulvérulents, puis la découpe d'un disque de type 1B d'épaisseur déterminée,
- la formation d'un composite bicouche par superposition des deux types de disques découpés (1A et 1B) et forgeage à chaud (250° - 450° C) du composite bicouche dans un moule approprié pour obtenir le piston souhaité,

Un autre document (US - A - 870 919) décrit la préparation d'un filament bi-métallique fritté dans lequel des poudres d'oxydes métalliques sont placées en couches longitudinales ou coaxiales puis frittées dans une atmosphère réductrice.

Il s'avère qu'en raison de la complexité de la mise au point de certains matériaux hétérogènes, de nombreux travaux de recherche dans ce domaine sont réalisés notamment afin de tenter d'optimiser les propriétés de ces matériaux. En effet, les propriétés d'un matériau (comme par exemple la microdureté, la luminescence ou la conductibilité thermique) sont le plus souvent liées à une microstructure particulière dépendant à la fois de la composition du matériau et des traitements thermiques subis par celui-ci tels que, par exemple, le frittage ou les processus de recuit. De ce fait, les relations liant les propriétés et la microstructure à la composition et au traitement thermique d'un matériau jouent un rôle prépondérant dans la réalisation de ces matériaux complexes.

L'objet de la présente invention est un procédé de préparation d'un matériau hétérogène stratifié, fritté résultant d'une découpe particulière puis soumis à un traitement thermique, ce matériau de forme parallélépipédique ou cylindrique étant formé à partir d'au moins deux constituants, qui sont des métaux, des oxydes métalliques ou des matériaux minéraux.

Une application du matériau selon l'invention, élaboré suivant la technique de la fusion de zone ou de la zone flottante et donnant une fibre monophasée monocristalline ou polycristalline ou vitreuse à gradient de composition, est l'utilisation de cette fibre dans un procédé d'optimisation rapide des caractéristiques physiques de ces matériaux solides. Or, le matériau de l'invention, utilisé dans le procédé mentionné ci-dessus, peut présenter un vif intérêt économique dans de nombreux secteurs d'activité industrielle notamment au vu d'une réduction substantielle du coût, engendrée par la mise au point rapide de matériaux présentant des caractéristiques physiques optimisés.

La présente invention a pour objet un procédé de préparation d'un matériau, de forme parallélépipédique ou cylindrique, formé d'au moins deux constituants purs ou d'au moins deux mélanges de compositions différentes, ces mélanges étant ou non formés des mêmes constituants et se différenciant entre eux qualitativement et/ou quantitativement, constituants qui sont des métaux, des oxydes métalliques ou des matériaux minéraux, se présentant sous la forme de poudre ou sous la forme de matière fondue broyée après solidification, le procédé étant caractérisé en ce qu'il comporte les étapes suivantes :
a) chacun des constituants purs ou mélanges de compositions différentes est introduit de façon successive dans un moule, de forme parallélépipédique ou cylindrique et de dimensions adéquates, puis est compacté dans ledit moule selon un tassement mécanique formant ainsi par étape successive des couches ou strates superposées, de hauteurs identiques ou différentes, qui à leur tour sont compressées sous presse, pour former un matériau hétérogène stratifié;
b) le matériau stratifié et démoulé subit un traitement thermique de frittage en four à température et pression adéquates pour former un matériau hétérogène fritté;
c) le matériau hétérogène fritté est découpé selon un parallélépipède ou un cylindre pour former un matériau hétérogène fritté découpé, la découpe du matériau hétérogène fritté étant pratiquée :
   c1 - perpendiculairement à l'interface séparant les couches successives,
   c2 - ou bien, de telle sorte que les plans de séparation des couches successives et de compositions différentes, initialement horizontaux dans le matériau hétérogène fritté, deviennent après découpe, des plans de séparation entre lesdites couches en position oblique dans le parallélépipède ou cylindre découpé.
d) le matériau hétérogène fritté découpé est soumis à un traitement thermique qui est une fusion de zone pour rendre miscibles les constituants le formant en donnant une fibre à gradient de composition desdits constituants.

La présente invention a également pour objet les matériaux de l'invention réalisés selon la technique de la fusion de zone ou de la zone flottante et donnant des fibres monophasées ou polyphasées à gradient de composition.

Le matériau solide, de forme parallélépipédique ou cylindrique, réalisé selon l'invention est formé à partir d'au moins deux constituants, qui sont des métaux, des oxydes métalliques ou des matériaux minéraux, se présentant sous la forme de poudre ou sous la forme de matière fondue qui, une fois solidifiée, est broyée. A titre de matériaux réalisés selon ladite invention, on peut citer par exemple les alliages métalliques, toutes les céramiques industrielles et en particulier les céramiques hautement réfractaires, les cermets ou les matériaux minéraux binaires ou d'ordre supérieur. On peut mentionner plus particulièrement à titre d'exemples, les alliages aluminium-cobalt, fercobalt ou les céramiques vitreuses ou les céramiques utilisées dans la fabrication de porcelaines ou encore les cermets Aluminium et alumine.

Le matériau selon l'invention est un matériau hétérogène en composition, qui est formé à partir d'au moins deux constituants tels que définis précédemment.

Il convient par ailleurs de noter que dans le procédé selon l'invention, le matériau se présente généralement sous la forme d'un barreau, c'est-à-dire un barreau hétérogène en composition. Ces barreaux hétérogènes ont généralement les dimensions usuelles de l'art. Des dimensions de l'ordre de 1 centimètre à plus d'un mètre de longueur et de l'ordre de 0,5 à 3 centimètres de diamètre sont, par exemple, considérés comme des dimensions usuelles pour réaliser un barreau tel que défini précédemment. Toutefois, il convient de noter que ces dimensions ne sont pas limitatives puisque l'on peut créer des barreaux de quelques micromètres de longueur et de diamètre, et à l'inverse créer des barreaux de quelques mètres et de plusieurs centimètres de diamètre.

Ce barreau hétérogène peut être réalisé à l'aide d'un moule de forme appropriée, dans lequel sont introduits, au moins deux constituants purs (tel que par exemple dans le domaine des métaux: le fer, le cobalt, l'aluminium, le cuivre, tel que par exemple dans le domaine des oxydes métalliques: Al₂O₃, Ag₂O, MnO₂, ZnO₂, Y₂O₃, Yb₂O₃, Gd₂O₃, tel que par exemple dans le domaine des matériaux minéraux thermiquement stables: NaCl, CaF₂, YF₃) ou au moins deux mélanges de compositions différentes, ces mélanges (tel que par exemple Y₂O₃-Gd₂O₃, Y₂O₃-Yb₂O₃-Er₂O₃, Y₂O₃-YF₃) étant ou non formés des mêmes constituants et se différenciant entre eux qualitativement et/ou quantitativement. Ces constituants purs ou mélanges de compositions différentes sont introduits sous forme de couches successives progressivement compactées dans un moule de forme appropriée, formant ainsi des couches ou strates superposées de hauteurs identiques ou différentes. Chaque constituant peut se présenter sous la forme d'une poudre ou bien sous la forme de matière fondue broyée après solidification. Chaque mélange est préalablement rendu homogène (par un mixage des poudres ou par une fusion qui est, dans ce cas, suivie d'une solidification puis d'un broyage) avant son introduction dans le moule.

Le moule, dans lequel les constituants du barreau sont introduits successivement, est généralement de forme parallélépipédique ou cylindrique. Chacun desdits constituants (c'est-à-dire constituant pur ou mélange de compositions différentes tels que définis précédemment) du barreau est introduit dans le moule, parallélépipédique ou cylindrique et de dimensions adéquates, puis compacté dans ledit moule selon un tassement mécanique, et ceci de façon successive, formant ainsi des couches ou strates superposées de hauteurs identiques ou différentes. Après l'introduction des divers constituants du barreau dans le moule, les différentes couches ou strates formées correspondant aux constituants présents dans le matériau, sont mises sous pression à l'aide d'une presse. Pour que ces divers constituants soient suffisamment compactés et permettre un démoulage ultérieur du matériau (barreau) stratifié ainsi formé, une pression est exercée sous presse, qui est éventuellement sous atmosphère contrôlée, sur l'ensemble des différentes couches entassées successivement dans le moule choisi.

Par exemple, si le matériau à réaliser est un barreau hétérogène, à savoir constitué de deux constituants A et B, on introduit tout d'abord dans le moule de forme appropriée, la poudre (A) que l'on compacte selon un tassement mécanique de façon à obtenir une surface planifiée, puis on introduit ( au-dessus de la poudre (A) compactée) la poudre (B) dans le moule. Les deux couches (A) et (B) formées correspondant aux constituants (A) et (B) du matériau, sont mises sous pression à l'aide d'une presse.

Une fois, la pression sous presse exercée pendant un temps suffisamment long, le démoulage du barreau est effectué, le barreau stratifié ayant alors la même forme que le moule dans lequel il aura été formé (c'est-à-dire une forme parallélépipédique ou cylindrique).

Dès que les étapes de moulage et de démoulage du barreau sont terminées, le barreau stratifié et démoulé, qui est formé à partir d'au moins deux constituants tels que définis précédemment, subit un traitement thermique de frittage en four à température et pression adéquates, pour former un barreau hétérogène stratifié et fritté.

Ce traitement thermique de frittage se déroule à des températures qui vont varier suivant le matériau utilisé et vont par conséquent être déterminées en fonction de la nature du matériau formé. De ce fait, la température maximale fixée pour le traitement de frittage dépend du matériau et est déterminée en fonction de la température de fusion de ce matériau. L'homme du métier est tout à fait à même de déterminer cette température, qui est généralement fixée entre 50 °C et 100 °C au-dessous de la température de fusion du matériau (barreau) destiné à subir le traitement thermique de frittage.

Pour effectuer le traitement thermique de frittage, le barreau démoulé est tout d'abord introduit dans un four, et la température dudit four est augmentée progressivement selon un programme de température, à une température fixée entre 50 °C et 100 °C au-dessous de la température de fusion du barreau destiné à subir le traitement thermique de frittage. Préalablement à la mise en température dudit four, un balayage du four en atmosphère contrôlée oxydante, réductrice ou inerte peu être réalisé, sous pression constante. Le choix approprié de l'atmosphère contrôlée à utiliser dépend également du matériau, et une fois encore l'homme du métier est tout à fait capable de choisir l'atmosphère contrôlée appropriée en fonction de la nature du matériau utilisé pour effectuer un balayage à pression constante du four.

Par ailleurs, lorsque le balayage du four est réalisé en atmosphère réductrice, le milieu réducteur peut par exemple contenir jusqu'à 10% d'hydrogène (H₂).

On peut également placer le four sous vide et la température de celui-ci sera également imposée selon un programme de température à une température fixée entre 50 °C et 100 °C au-dessous de la température de fusion du matériau.

Au cours de cette étape, un programme de température à l'intérieur du four est imposé. Suivant le programme de température choisi, une augmentation de la température du four peut être imposée de façon continue ou peut être effectuée par étapes et paliers successifs jusqu'à ce que la température de celui-ci atteigne une température fixée entre 50 °C et 100 °C au-dessous de la température de fusion du matériau. Dans ce dernier cas, l'augmentation de la température du four se fait par étape selon une vitesse de montée en température choisie en fonction des propriétés physico-chimiques des matériaux à fritter, et peut nécessiter, par ailleurs, un certain nombre de paliers. En effet, des paliers successifs peuvent être nécessaires lors de la montée en température du four pour permettre la relaxation des contraintes internes subies par le matériau. Un certain nombre de paliers peut être par conséquent déterminé lors de la montée en température du four, la lettre «n» représentant le nombre de paliers. Selon le nombre de paliers choisis, le temps de chaque palier sera, plus ou moins, long ou court, sachant que le temps de palier peut varier entre quelques minutes et plusieurs heures. Ainsi, si le nombre de paliers («n») est grand, le temps du palier pourra être plus court. Par contre, si le nombre de paliers «n» est petit, le temps du palier aura intérêt à être plus long. Dès que la température du four fixée entre 50 °C et 100 °C au-dessous de la température de fusion du matériau est atteinte, et maintenue pendant un temps suffisamment long, le refroidissement du four pourra être amorcé suivant une décroissance continue ou par paliers successifs.

Dans ce dernier cas, le refroidissement en température du four se fait de la même façon que la montée en température du four, c'est-à-dire par étape et paliers successifs. La descente en température du four se fait donc avec une vitesse de diminution lente en température et avec le même nombre ou non de paliers que la montée en température du four.

A la suite du traitement thermique de frittage approprié, un barreau hétérogène stratifié, fritté est obtenu. Une découpe particulière de ce barreau hétérogène fritté, est réalisée selon un parallélépipède ou un cylindre pour former un barreau hétérogène fritté et découpé.

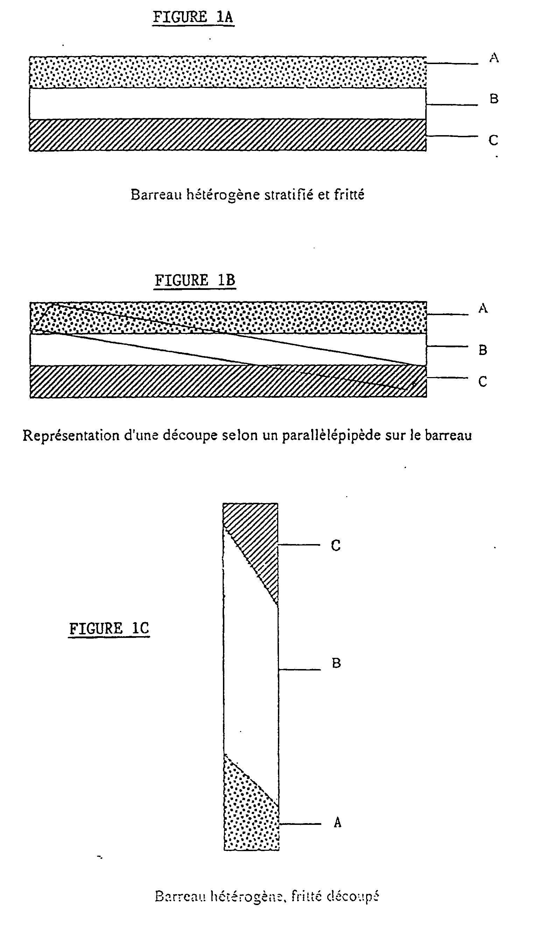

Cette découpe particulière selon l'invention peut être perpendiculaire à l'interface séparant les couches successives ou elle peut être pratiquée de telle sorte que les plans de séparation des couches successives et de compositions différentes, initialement horizontaux dans le barreau hétérogène fritté, deviennent après découpe, des plans de séparation entre lesdites couches en position oblique dans le parallélépipède ou cylindre découpé (voir, par exemple, les figures 1A, 1B, 1C).

Ainsi, le barreau hétérogène fritté résultant de la découpe (à savoir le barreau hétérogène stratifié, fritté et découpé) est constitué de strates ou couches de compositions différentes disposées soit horizontalement, soit en position oblique.

La figure 1A représente une vue faciale d'un barreau hétérogène, de forme parallélépipédique, stratifié et fritté, constitué de trois constituants A, B et C; la figure 1B représente une vue faciale de ce barreau où est représentée une découpe selon un parallélépipède et la figure 1C représente une vue faciale du barreau hétérogène fritté découpé obtenu.
Le matériau hétérogène fritté découpé est soumis à un traitement thermique, pour rendre miscibles les constituants le formant en donnant une fibre. Le traitement thermique est une fusion de zone qui peut être effectuée selon la technique de la fusion de zone ou de la zone flottante.

Suivant la nature des constituants utilisés lors de la réalisation du matériau hétérogène fritté découpé de l'invention, et le choix, comme traitement thermique, de la technique de la fusion de zone ou de la zone flottante choisie, le matériau élaboré selon l'invention sera une fibre monophasée ou polyphasée à gradient de composition.

A titre de rappel, un matériau est monophasé lorsqu'il est constitué d'une seule phase (la phase étant une partie homogène d'un système matériel). Par opposition au matériau monophasé, un matériau est dit polyphasé s'il est constitué de plusieurs phases. Par définition, une phase est homogène ou uniforme dans toute son étendue (voir I. Prigogine et R.Defay, Thermodynamique Chimique, Ed. Desoer, Liège, 1944, Tome I, page 7). Lors d'un changement de phase, le système, au sens de la thermodynamique, se présente comme la réunion de deux sous-systèmes homogènes possédant des propriétés distinctes. On appelle phase chacun des deux sous-systèmes. Plus précisément, une phase est une partie homogène, physiquement distincte, séparée des autres parties du système par une surface définie. La phase sous laquelle un système se présente est déterminée par la connaissance d'un certain ensemble de paramètres intensifs: température, pression, champ électrique ou magnétique, composition, structure (voir comme référence Encyclopaedia Universalis, France, vol. 12, 1980, page 923).

En effet, sur le barreau hétérogène fritté tel qu'il est obtenu après découpe, et constitué d'au moins deux constituants qui peuvent être des métaux ou des composés chimiques solides tel que défini précédemment, peut être réalisée une fusion de zone selon la technique de la fusion de zone (fondue) ou de zone flottante. Les techniques de fusion de zone ou de zone flottante sont connues de l'art antérieur [voir par exemple, W.G. Pfann, Zone melting, J.Wiley N-Y 1958 ou L'art et la Science du développement des cristaux, J.Wiley et fils, Inc., N-Y, 3^{ème} édition, 1996, pages 347-361, 389, 392 ou encore R.S.Feigelson, W.L. Kway, R.K. Route, Proc. SPIE Arlington-virginia, 484, 1984, 133].

La fusion de zone, réalisée selon les deux techniques citées précédemment, provoque une évolution progressive de la composition du liquide constituant la zone fondue, en raison de la solubilisation (dissolution ou fusion) progressive et en proportions variables des constituants formant le barreau hétérogène fritté tel qu'obtenu après découpe. L'évolution de la composition du liquide constituant la zone fondue induit une évolution de la composition du solide cristallisé ou vitreux qui se forme lors du déplacement de la partie liquide le long du barreau hétérogène fritté tel qu'obtenu après découpe.

Ainsi, à partir du barreau hétérogène fritté découpé de l'invention, qui est formé à partir d'au moins deux constituants rendus miscibles par fusion de zone, une fibre monophasée ou polyphasée à gradient de composition est élaborée par déplacement de la zone fondue le long du barreau fritté et découpé de l'invention.

Une des applications du matériau selon l'invention, qui est une fibre monophasée monocristalline ou polycristalline ou vitreuse à gradient de composition obtenue selon la technique de la fusion de zone ou de la zone flottante, est l'utilisation de ce matériau (c'est-à-dire la fibre monophasée), dans un procédé d'optimisation rapide des caractéristiques physiques de ce matériau, par détermination de la composition idéale pour ledit matériau.

Une autre des applications du matériau de l'invention, qui est une fibre polyphasée à gradient de composition obtenue selon la technique de la fusion de zone ou de la zone flottante, est l'observation des phases permettant d'établir le spectre des transformations de phases dans un diagramme de phases.

Il convient toutefois de noter que, dans le cas, d'une fibre monophasée monocristalline ou polycristalline ou vitreuse à gradient de composition obtenu selon l'invention dont les dimensions sont supérieures aux limites imposées par les appareillages de mesure, ladite fibre sera tronçonnée en fibre de dimension adéquate et chaque partie tronçonnée sera analysée selon le procédé d'optimisation rapide des caractéristiques physiques du matériau, procédé mentionné précédemment.

## Revendications

1. Procédé de préparation d'un matériau, de forme parallélépipédique ou cylindrique, formé d'au moins deux constituants purs ou d'au moins deux mélanges de compositions différentes, ces mélanges étant ou non formés des mêmes constituants et se différenciant entre eux qualitativement et/ou quantitativement, constituants qui sont des métaux, des oxydes métalliques ou des matériaux minéraux, se présentant sous la forme de poudre ou sous la forme de matière fondue broyée après solidification, **caractérisé en ce qu'**il comporte les étapes suivantes :
a) chacun des constituants purs ou mélanges de compositions différentes est introduit de façon successive dans un moule, de forme parallélépipédique ou cylindrique et de dimensions adéquates, puis est compacté dans ledit moule selon un tassement mécanique formant ainsi par étape successive des couches ou strates superposées, de hauteurs identiques ou différentes, qui à leur tour sont compressées sous presse, pour former un matériau hétérogène stratifié;
b) le matériau stratifié et démoulé subit un traitement thermique de frittage en four à température et pression adéquates pour former un matériau hétérogène fritté;
c) le matériau hétérogène fritté est découpé selon un parallélépipède ou un cylindre pour former un matériau hétérogène fritté découpé, la découpe du matériau hétérogène fritté étant pratiquée :
c1 - perpendiculairement à l'interface séparant les couches successives,
c2 - ou bien, de telle sorte que les plans de séparation des couches successives et de compositions différentes, initialement horizontaux dans le matériau hétérogène fritté, deviennent après découpe, des plans de séparation entre lesdites couches en position oblique dans le parallélépipède ou cylindre découpé.
d) le matériau hétérogène fritté découpé est soumis à un traitement thermique qui est une fusion de zone pour rendre miscibles les constituants le formant en donnant une fibre à gradient de composition desdits constituants.

2. Procédé selon la revendication 1, **caractérisé en ce que** le traitement thermique de frittage se fait selon un programme de température.

3. Procédé selon l'une au moins des revendications 1 à 2, **caractérisé en ce que** la température du traitement thermique de frittage est imposée selon un programme de température à une température fixée entre 50 °C et 100 °C au-dessous de la température de fusion du matériau.

4. Procédé selon l'une au moins des revendications 1 à 3, **caractérisé en ce que** le traitement thermique de frittage se fait en atmosphère contrôlée oxydante, réductrice ou inerte sous pression constante.

5. Procédé selon l'une au moins des revendications 1 à 4, **caractérisé en ce que** le matériau hétérogène fritté découpé est constitué de strates ou couches de compositions différentes disposées soit horizontalement, soit en position oblique.

6. Procédé selon l'une au moins des revendications 1 à 5, **caractérisé en ce que** le traitement thermique est une fusion de zone selon la technique de la fusion de zone ou de la zone flottante.

7. Procédé selon l'une au moins des revendications 1 à 6, **caractérisé en ce que** la fibre à gradient de composition obtenue selon la technique de la fusion de zone ou de la zone flottante est monophasée, monocristalline ou polycristalline ou vitreuse.

8. Procédé selon l'une au moins des revendications 1 à 6, **caractérisé en ce que** la fibre à gradient de composition obtenue selon la technique de la fusion de zone ou de la zone flottante, est polyphasée.

## Patentansprüche

1. Verfahren zur Herstellung eines Werkstoffs von quader oder zylindrischer Form, gebildet durch wenigstens zwei reine Bestandteile oder wenigstens zwei Mischungen mit unterschiedlichen Zusammensetzungen, wobei diese Mischungen durch dieselben Bestandteile gebildet werden oder nicht und sich untereinander qualitativ und/oder quantitative unterscheiden, und diese Bestandteile Metalle, metallische Oxide oder mineralische Materialien sind, die sich in Form von Pulvern oder von eingeschmolzenem, nach der Erstarrung zerkleinertem Material präsentieren,
**dadurch gekennzeichnet, dass** es die folgenden Schritte umfasst:
a) jeder der reinen oder durch Mischungen mit unterschiedlichen Zusammensetzungen gebildeten Bestandteile wird in sukzessiver Weise in eine Form von quader oder zylindrischer Form mit adäquaten Dimensionen gegeben, dann in dieser Form durch eine mechanische Verdichtung kompaktiert, so dass sich schrittweise sukzessiv übereinanderliegende Schichten oder Lagen mit gleichen oder unterschiedlichen Höhen bilden, die ihrerseits in einer Presse verdichtet werden, um ein geschichtetes heterogenes Material zu bilden;
b) das der Form entnommene geschichtete Material wird einer thermischen Sinterbehandlung in einem Ofen unterzogen, dessen Druck und Temperatur die Bildung eines gesinterten heterogenen Materials bewirken;
c) das gesinterte heterogene Material wird entsprechend einem Parallelflach oder Zylinder zugeschnitten, um ein zugeschnittenes gesintertes heterogenes Material zu bilden, wobei das Zuschneiden des gesinterten heterogenen Materials folgendermaßen erfolgt:
c1 - senkrecht zu der die aufeinanderfolgenden Schichten trennenden Grenzfläche,
c2 - oder auch so, dass die Trennungsebenen der aufeinanderfolgenden und unterschiedlich zusammengesetzten, in dem gesinterten heterogenen Material ursprünglich horizontalen Schichten nach dem Zuschneiden in dem zugeschnittenen Parallelflach oder Zylinder Trennungsebenen in schräger Lage zwischen den genannten Schichten werden;
d) das zugeschnittene gesinterte heterogene Material wird einer thermischen Behandlung unterzogen, die ein Zonenschmelzverfahren ist, um die es bildende Bestandteile mischbar zu machen, so dass sich eine aus den genannten Bestandteilen zusammengesetzte Gradientenfaser ergibt.

2. Verfahren nach Anspruch 1, **dadurch gekennzeichnet, dass** die thermische Sinterbehandlung gemäß einem Temperaturprogramm erfolgt.

3. Verfahren nach wenigstens einem der Ansprüche 1 bis 2, **dadurch gekennzeichnet, dass** für die thermische Sinterbehandlung durch ein Temperaturprogramm eine Temperatur vorgeschrieben wird, die zwischen 50 °C und 100 °C unter *der* Schmelztemperatur des Materials festgelegt ist.

4. Verfahren nach wenigstens einem der Ansprüche 1 bis 3, **dadurch gekennzeichnet, dass** die thermische Sinterbehandlung in kontrollierter oxidierender, reduzierender oder inerter Atmosphäre unter konstantem Druck stattfindet.

5. Verfahren nach wenigstens einem der Ansprüche 1 bis 4, **dadurch gekennzeichnet, dass** das zugeschnittene gesinterte heterogene Material durch Lagen oder Schichten unterschiedlicher Zusammensetzung gebildet wird, die entweder horizontal oder in schräger Lage angeordnet sind.

6. Verfahren nach wenigstens einem der Ansprüche 1 bis 5, **dadurch gekennzeichnet, dass** die thermische Behandlung ein Zonenschmelzverfahren gemäß der Zonenschmelztechnik oder der tiegelfreies Zonentechnik ist.

7. Verfahren nach wenigstens einem der Ansprüche 1 bis 6, **dadurch gekennzeichnet, dass** die gemäß der Zonenschmelztechnik oder der tiegelfreies Zonentechnik erhaltene Zusammensetzungsgradientenfaser einphasig, monokristallin oder polykristallin oder glasartig ist.

8. Verfahren nach wenigstens einem der Ansprüche 1 bis 6, **dadurch gekennzeichnet, dass** die gemäß der Zonenschmelztechnik oder der tiegelfreies Zonentechnik erhaltene Zusammensetzungsgradientenfaser vielphasig ist.

## Claims

1. Process for preparation of a parallelepiped or cylindrical shaped material formed from at least two pure constituents or at least two mixes of different compositions, these mixes possibly but not necessarily being formed from the same constituents and being qualitatively and / or quantitatively differentiated from each other, constituents that are metals, metal oxides or mineral materials, in the form of a powder or in the form of a ground molten material after solidification, **characterized in that** it comprises the following steps:
a) each of the pure constituents or mixes of different compositions is introduced successively onto a parallelepiped or cylindrical shaped mould with appropriate dimensions, and is then compacted in the said mould by a mechanical compaction thus forming superposed layers or strata in successive steps, with identical or different heights, which in turn are compressed in a press to form a laminated heterogeneous material;
b) after removal from the mould, the stratified material is subjected to a sintering heat treatment in the furnace at an appropriate temperature and pressure to form a sintered heterogeneous material;
c) the sintered heterogeneous material is cut-out in the shape of a parallelepiped or a cylinder to form a cut-out sintered heterogeneous material, the cut-out of the sintered heterogeneous material being formed:
c1 - perpendicularly to the interface separating the successive layers,
c2 - or such that the separation planes of the successive layers with different compositions, initially horizontal in the sintered heterogeneous material, become after cutting, separation planes between the said layers in an oblique position in the cut-out parallelepiped or cylinder.
d) the cut-out sintered heterogeneous material is subjected to a heat treatment which is a zone melting in order to achieve the miscibility of the constituents forming it thus forming a fibre with a composition gradient of the said constituents.

2. Process according to claim 1, **characterized in that** the sintering heat treatment is made according to a temperature program.

3. Process according to at least one of claims 1 to 2, **characterized in that** the sintering heat treatment temperature is imposed according to a temperature program at a temperature fixed between 50°C and 100°C below the melting temperature of the material.

4. Process according to at least one of claims 1 to 3, **characterized in that** the sintering heat treatment is done under an oxidizing, reducing or inert controlled atmosphere at constant pressure.

5. Process according to at least one of claims 1 to 4, **characterized in that** the cut-out sintered heterogeneous material is composed of strata or layers with different compositions arranged either horizontally or in an oblique position.

6. Process according to at least one of claims 1 to 5, **characterized in that** the heat treatment is a zone melting using the zone melting or floating zone technique.

7. Process according to at least one of claims 1 to 6, **characterized in that** the fibre with a composition gradient obtained according to the zone melting or floating zone technique is monophase, monocrystalline or polycrystalline or vitreous.

8. Process according to at least one of claims 1 to 6, **characterized in that** the fibre with a composition gradient obtained according to the zone melting or floating zone technique is polyphase.
